Europäisches Patentamt

European Patent Office

Office européen des brevets

(11) Numéro de publication: **0 250 283 B1**

# FASCICULE DE BREVET EUROPEEN

(45) Date de publication de fascicule du brevet:
20.03.91

(51) Int. Cl.5: **F16H 49/00, F16H 57/04**

(21) Numéro de dépôt: 87401143.0

(22) Date de dépôt: 21.05.87

(54) Mécanisme d'entraînement du type "Harmonic Drive" pour utilisation dans le vide.

(30) Priorité: 22.05.86 FR 8607318

(43) Date de publication de la demande:
23.12.87 Bulletin 87/52

(45) Mention de la délivrance du brevet:
20.03.91 Bulletin 91/12

(84) Etats contractants désignés:
DE FR GB IT NL

(56) Documents cités:
US-A- 2 906 143

ANTRIEBSTECHNIK, vol. 25, no. 4, 1986, pages 67-69, Mainz, DE; F. MANN: "Einsatz von harmonic Drive in Fahrantrieben"

PRODUCT ENGINEERING, 8 février 1960, pages 47-51, Morgan-grampian Publication Corp., New York, US; "Innovation in high-ratio gearing"

LUBRICATION by A.R. LANDSDOWN, 1982 Oxford

(73) Titulaire: **ALCATEL ESPACE**
**11, avenue Dubonnet**
**F-92407 Courbevoie Cédex(FR)**

(72) Inventeur: **Capdepuy, Marc**
**Lieu dit Magne Fontenilles**
**F-3140 St Lys(FR)**

(74) Mandataire: **Weinmiller, Jürgen et al**
**Lennéstrasse 9 Postfach 24**
**W-8133 Feldafing(DE)**

## Description

La présente invention concerne un mécanisme tel que défini dans le priambule de la revendication unique pouvant orienter différents systèmes (antenne, téléscope par exemple) en absence d'atmosphère et de pesanteur.

Un tel mécanisme est comme par le document "Antriebstechnik, 4.86, pages 67 à 69.

Pour réaliser un entraînement dans un tel environnement, on peut utiliser un moteur conçu pour un fonctionnement sous vide. Le moteur entraîne directement la charge dont le couple est limité au couple d'entraînement du moteur.

Il existe également des systèmes avec démultiplication qui utilisent des réducteurs à trains d'engrenage. Ces systèmes ont l'avantage d'augmenter le couple d'entraînement par rapport au couple moteur. Pour des applications dans le vide, comme dans le domaine spatial, le choix des matériaux limite souvent les utilisations compte-tenu des contraintes d'environnement. De tels systèmes sont encombrants et de masse importante.

Pour des applications en atmosphère terrestre, on peut utiliser des mécanismes comportant des réducteurs "Harmonic Drive". Ces systèmes réducteurs permettent d'obtenir en un seul train et à faible encombrement des démultiplications importantes. Ils utilisent le plus souvent une lubrification fluide, technologie très satisfaisante dans un tel environnement.

Mais en cas d'applications spatiales, une telle technologie présente de graves risques de pollution sur les pièces environnantes du mécanisme d'entraînement.

L'invention telle que définie la revendication unique a pour objet de pallier cet inconvénient.

Les caractéristiques et avantages de l'invention ressortiront d'ailleurs de la description qui va suivre, à titre d'exemple non limitatif, en référence aux figures annexées sur lesquelles :

- les figures 1 et 2 illustrent schématiquement le fonctionnement d'un réducteur "Harmonic Drive",

- la figure 3 illustre une représentation d'un mécanisme d'entraînement utilisé dans l'invention.

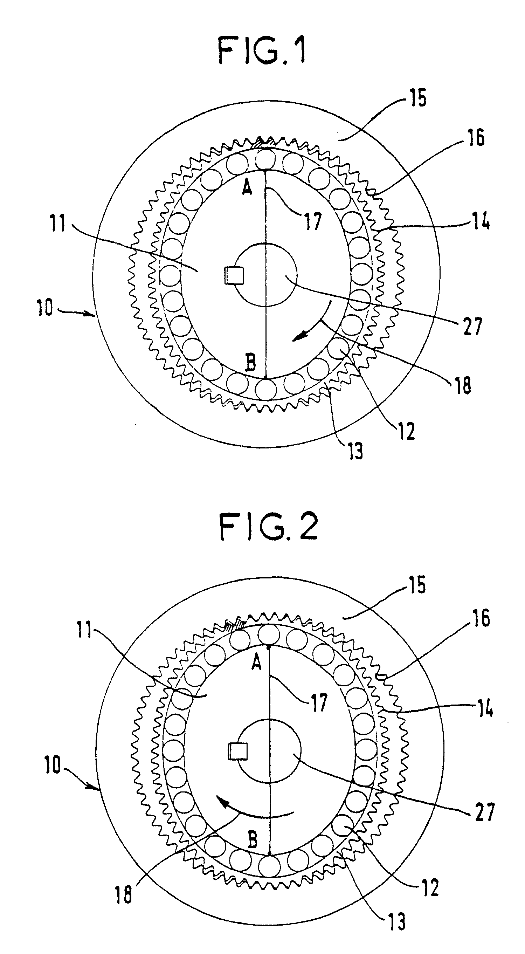

Le réducteur "Harmonic Drive" représenté aux figures 1 et 2 est composé de trois éléments :

- un générateur elliptique 11 qui garantit par son roulement à billes 12 une transmission à rendement élevé ;

- une couronne flexible 13 à denture extérieure 14 qui, en fonctionnement, est déformée par le générateur 11 ;

- une couronne rigide 15 à-denture intérieure 16 de même pas que celui de la couronne flexible, mais ayant deux dents de plus que celleci.

Cette couronne 15 engrène continuellement la denture 14 de la couronne flexible 13 sur le grand axe 17 (AB) de l'ellipse du générateur 11. Environ 15 % des dents des deux couronnes 13 et 15 sont perpétuellement en contact.

Du fait de la différence de denture entre les deux couronnes 13 et 15, les diamètres primitifs de celles-ci se différencient dans le même rapport, et la rotation 18 du générateur elliptique 11 provoque un mouvement relatif de ces couronnes 13 et 15.

Les figures 1 et 2 représentent un tel réducteur "Harmonic Drive" avant et après une rotation complète de 360° de l'arbre 27 du générateur elliptique 11. La couronne flexible 13 s'est, dans ce dernier cas, déplacée de deux dents dans le sens opposé à la rotation 18 par rapport à la couronne rigide 15.

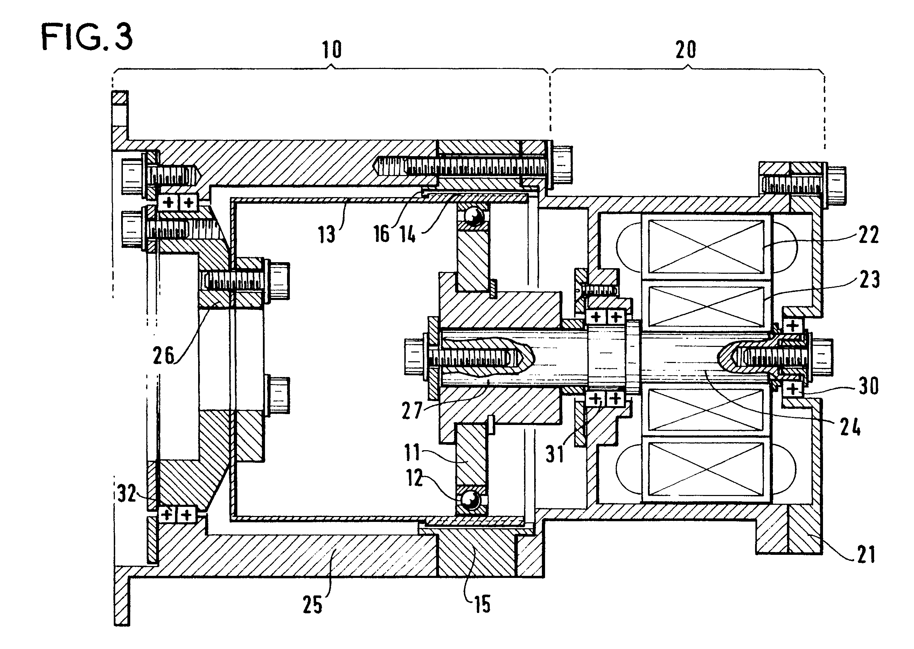

Le mécanisme d'entraînement représenté à la figure 3, est composé de :

- un ensemble moteur 20 comprenant dans une carcasse moteur 21 un stator 22, un rotor 23 et un arbre moteur 24 ;

- un réducteur "Harmonic Drive" 10, tel que représenté aux figures 1 et 2, avec ses trois sous-ensembles que sont le générateur elliptique 11, la couronne circulaire 15 et la couronne flexible 13 ;

- un ensemble support 25 solidaire de la couronne circulaire 15 ;

- un arbre de sortie 26 de même axe de rotation que l'arbre moteur 24 entraîné par la couronne flexible 13.

Différents roulements à billes permettent la rotation de l'arbre moteur 24 couplé à l'arbre 27 du générateur elliptique à savoir un roulement 30 et un montage 31 de roulements précontraints; et de l'arbre de sortie 26 à savoir des roulements appariés 32.

La présente invention concerne un tel mécanisme d'entraînement à grand débattement comprenant un ensemble moteur 20 associé à un réducteur "Harmonic Drive" 10; le générateur elliptique 11 étant couplé à l'arbre moteur 24 monté sur roulements à billes, la couronne circulaire 15 étant solidaire de l'ensemble support, et la couronne flexible 13 entraînant l'arbre de sortie 26 monté également sur roulements à billes, l'ensemble utilisant des moyens de lubrification sèche présentant l'avantage d'employer des matériaux ne dégazant pas dans le vide et donc supprimant les risques de pollution sur les pièces environnantes du mécanisme dans le cas d'application spatiale. Pour les roulements à billes circulaires 30, 31, 32, et ovale 12 est utilisée une lubrification par dépôts de lubrifiants solides. Sur la denture des couronnes circulaire 15 et flexible 13 est utilisée une lubrification correspondant au de procédé suivant:

- revêtement d'un vernis de glissement en PTFE

Le caractère original de l'invention est lié à l'association d'un mécanisme particulier et de procédés de lubrification sèche permettant une durée de vie potentielle de quelques milliers d'heures.

Cette invention présente l'avantage d'utiliser des systèmes mécaniques d'entraînement moteur et réducteur dont les matériaux sont de qualité spatiale (absence de dégazage).

De plus, elle utilise des moyens de lubrification adaptés au fonctionnement dans le vide. Pour tous les roulements à billes, le procédé de lubrification consiste en un dépôt de lubrifiant solide sur les billes et les pistes. Les matériaux les mieux adaptés à ce procédé sont le bisulfure de Molybdène MoS$_2$ et le plomb.

Pour les couronnes circulaire 15 et flexible 13 du réducteur, peut être utilisée une lubrification par revêtement de matériaux sur les dentures. Parmi les procédés les mieux adaptés au fonctionnement dans le vide, le revêtement de PTFE polytétrafluorethylene permet de transmettre des efforts suffisamment importants sans dégradation des matériaux en contact, tout en assurant une bonne précision.

Ainsi le générateur elliptique 11 possède un roulement elliptique 12 utilisant une lubrification sèche adaptée à un fonctionnement en environnement spatial. Les autres roulements sont circulaires et servent de paliers aux arbres d'entraînement. Ils utilisent le même type de lubrification que le roulement elliptique 12. La denture des couronnes 13 et 15 subit un traitement auto-lubrifiant adapté au fonctionnement dans le vide, consistant en un dépôt de quelques micromètres d'épaisseur de PTFE.

De tels moyens de lubrification ont l'avantage de supprimer les inconvénients d'une lubrification fluide dans le vide, et notamment les problèmes liés à l'étanchéité.

En ambiance spatiale ou en ultra vide, les pièces métalliques ont tendance à se souder par diffusion moléculaire. L'interposition entre ces pièces de matériaux auto-lubrifiant supprime ce phénomène.

On peut prévoir entre le réducteur "Harmonic Drive" et le moteur un système d'alignement des axes du moteur et du générateur elliptique, par exemple un joint d'Holdam.

Pour vérifier la position de l'arbre de sortie un système de codage peut être monté sur cet arbre.

Lorsqu'il y a une information à passer, par exemple avec une antenne à fort débattement, un enrouleur de câble peut être monté sur l'arbre de sortie.

Pour réaliser une boucle de vitesse en retour, une génératrice tachymétrique peut être associée au mécanisme d'entraînement décrit.

Il est aussi possible d'utiliser un réducteur "Harmonic Drive" plat.

## Revendications

1. Mécanisme du type "Harmonic Drive" utilisable dans le vide spatial comportant :
   - un générateur elliptique (11) muni d'un roulement à billes (12)
   - une couronne flexible (13) à denture extérieure (14)
   - une couronne rigide (15) à denture intérieure (16)
   - un ensemble moteur (20) et un roulement à billes permettant la rotation du générateur, caractérisé en ce que lesdits roulements sont lubrifiés avec un matériau choisi parmi le bisulfure de molybdène et le plomb, et que les deux dentures sont lubrifiées par une couche d'un vernis de PTFE de quelques micromètres d'épaisseur.

## Claims

1. A drive mechanism of the "Harmonic Drive" type for use in space, comprising:
   - an elliptic generator (11) fitted with a ball bearing (12)
   - a flexible ring (13) having an outer toothing (14),
   - a rigid ring (15) having an inner toothing (16), and
   - a motor assembly (20) and a ball bearing allowing the rotation of the generator, characterized in that said bearings are lubricated by a material chosen among molybdenum bisulfide and lead, and in that the two toothings are lubricated by a layer of PTFE lacquer having a thickness of several micrometers.

## Ansprüche

1. Getriebe vom Typ "Harmonic Drive" zur Verwendung im Weltraum, mit:
   - einem elliptischen Generator (1) der ein Kugellager (12) aufweist,
   - einem flexiblen Ring (13) mit Außenverzahnung (14),
   - einem starren Ring (15) mit Innenverzahnung (16),
   - einer Motoreinheit (20) und einem Kugellager, die die Rotation des Generators ermöglichen, dadurch gekennzeichnet, daß die Kugellager mit einem Stoff geschmiert sind, der unter den Stoffen Molybdändisulfid und Blei ausgewählt wird, und daß die beiden Verzahnungen mit einer Schicht aus einem PTFE-Lack von einigen Mikrometern Dicke geschmiert sind.

EP 0 250 283 B1

# FIG.1

# FIG.2

5

# FIG.3

EP 0 250 283 B1